# NEW EUROPEAN PATENT SPECIFICATION

(11) **EP 0 198 675 B2**
(45) Date of publication and mention of the opposition decision: **13.04.1994**
(45) Mention of the grant of the patent: 11.09.1991
(21) Application number: 86302678.7
(22) Date of filing: 10.04.1986
(51) Int. Cl.: F16K 15/14, F16K 17/02, B65D 83/14, A23L 3/00

(54) **Self-regulating valve in a microwave system and a lidded vessel**
Selbstregulierendes Ventil in einem Mikrowellen- und Behältersystem
Vanne à autorégulation comprise dans un système à micro-ondes et contenant à couvercle

(30) Priority: 11.04.1985 US 722266
(43) Date of publication of application: 22.10.1986
(73) Proprietor: CEM Corporation, Matthews North Carolina 28105 (US)
(72) Inventor: Floyd, Terry S., Clover South Carolina 29710 (US); Hargett, Wyatt P., Jr., Matthews North Carolina 28105 (US)
(74) Representative: Patentanwälte Dipl.-Ing. R. Splanemann Dr. B. Reitzner Dipl.-Ing. K. Baronetzky

(56) References cited:
- DE-A- 2 603 712
- DE-A- 3 331 529
- FR-A- 2 039 795
- GB-A- 210 019
- US-A- 3 949 934
- US-A- 4 061 254
- US-A- 4 490 597
- US-A- 4 750 610

## Description

The present invention relates to an apparatus which comprises a microwave system and a lidded vessel including a container element and a normally closed, self-opening valve assembly as defined in claim 1. The invention is also related to a lidded vessel including a container element and a normally closed, self-opening and self-closing valve assembly as defined in claim 7. The features defined in the respective first part of the claims 1 and 7 are known from US-A-4490597. More particularly, this valve opens and closes in response to a change in the physical environment of the valve, and is especially useful as a relief valve.

As exemplified by A. Abu-Samra et al., Analytical Chemistry, 47, 1475 (1975), and P. Barrett et al., Analytical Chemistry, 7, 1021 (1978), a microwave oven-based, digestion technique using an acid digesting agent in an open vessel, is known. Barrett et al. report that this procedure decreases digestion time, compared to a hot plate heat source.

Also known, as illustrated by Nadkarni, Analytical Chemistry, 56, 2233 (1984), and S. A. Matthews et al, Bureau of Mines Technical Progress Report 120 (April 1983) is a microwave oven-based, digestion technique using an acid digesting agent in a closed system. In Nadkarni's procedure, a covered Teflon or polycarbonate beaker was placed in a partially evacuated, closed, glass desiccator so that acid fumes leaking from the covered beaker were trapped within the glass desiccator. A polycarbonate bottle with a polypropylene screw cap was used as a closed digestion vessel by Matthews et al., who cautioned against explosion caused by pressure build up within a closed vessel and observed leaking of some acid fumes around the bottle caps during pressure dissolution. Matthews et al. report that, compared to open vessel digestion, closed vessel digestion prevents the introduction of contaminating elements and the loss of volatile elements and compounds.

Accordingly, although closed system digestion has been found to have advantages over open vessel digestion, the containing vessel in a closed system could explode under pressure build up, with spewing of acid. The explosion hazard is enhanced, for example, if, as in tissue digestion, gas is generated by the digestion process. As a result, open vessel digestion is commonly utilized, particularly if the digestion process generates gas.

A lidded digestion vessel suitable for use in a microwave system-based digestion that employs a corrosive digesting agent, is available on the market either with or without an outlet port in the lid. This lidded vessel is formed of a deformable, resilient, highly chemically inert, thermoplastic material. This material is a fluorocarbon copolymer in which the carbon-fluorine backbone in the main chain is connected with perfluoroalkoxy side chains through oxygen links.

Prior art valves are exemplified by several U.S. Patents. US-A-4493444 is directed to a self-closing valve-and-lid assembly. US-A-4474211 pertains to a valve that includes a disc-like member through which apertures extend, and an aperture closing device having a pressure responsive flex web with openings offset from the apertures. US-A-4400401 relates to a method using microwave energy for sterilizing and canning food products within a non-metallic enclosure cover having an aperture controlled by a check valve regulated by a weight. Within the enclosure cover, a non-metallic jar with a nonmetallic lid having a vent hole closed by a vent closure, contains the food product.

Also known in the prior art is a manually operated, dispensing valve formed by an opening in a metallic can lid top, a resilient rubber insert located inside the lid top and having an outlet port portion that extends through the lid top, and a plastic pin element. The plastic pin element has a disc-like part with a raised portion that seats against the rubber insert to close the valve, and has a pin-like part that extends through the outlet port portion of the rubber insert for engagement with a nozzle. The valve is opened by finger pressure exerted against the nozzle.

Prior work known to us is a beryllium-copper spring, needle check valve. This valve attaches to an outlet port of a closed digestion vessel, as a pressure relief valve for explosion prevention. Because the beryllium-copper spring does not absorb microwave radiation, this valve is usable in a microwave system-based digestion procedure. However, a drawback is that beryllium is oxidizable, especially in an acid fume environment, to beryllium oxide, which results in the valve no longer being acceptable for use in a microwave system. Moreover, beryllium oxide is carcinogenic.

Therefore, there is a need for an improved valve that could be used as a pressure relief valve for explosion prevention in a microwave system-based, closed vessel digestion procedure. Such an improved valve would be of enhanced utility if it had a broad range of applications.

According to the present invention, there is provided an apparatus as defined in claim 1 including a valve responsive to a predetermined internal fluid pressure. The valve includes a dome-shaped, pressure-deformable wall member having an outlet port, and an abutment integral with a support member. The abutment has a contact-providing, seating surface adapted to surround the outlet port and engaged with an inside surface of the wall member in a tight sealing relationship that mechanically causes the wall member to be dome-shaped, and that blocks outflow through the outlet port when internal fluid pressure impinging on the wall member is insufficient to cause an additional outward deformation thereof that overcomes the tight sealing relationship.

The wall member is sufficiently pressure-deformable that the force of the predetermined internal fluid pressure acting thereon, causes the additional outward deformation, thereby opening the valve to permit pressure relief through the outlet port. The fluid pressure-deformed, wall member is sufficiently resilient that the wall member re-engages in the tight sealing relationship when internal fluid pressure impinging on the wall member becomes less than the predetermined internal fluid pressure, thereby closing the valve. In a preferred embodiment, this valve is sensitive not only to internal fluid pressure but also to temperature.

Also according to the present invention, there is a lidded vessel provided with a self-opening and self-closing valve as defined in claim 7. The valve includes a pressure-deformable, resilient wall member having an outlet port, and an obstructing member engaged in a tight sealing relationship with an an inner surface of the outlet port. As a result, outflow through the outlet port is blocked when internal fluid pressure impinging on the wall member is insufficient to cause a deformation thereof that overcomes the tight sealing relationship.

The apparatus that includes the microwave system and the lidded vessel/valve combination of the present invention includes in a preferred embodiment a corrosion resistant chamber, a corrosion resistant exhaust system capable of providing high volume air flow through the chamber, an element for absorbing excess reflected radiation, and a computer-controlled variable power source. The lidded vessel is microwave transparent.

Also provided is a closed vessel digestion method as defined in claim 3 using the lidded vessel/valve combination of the present invention. A sample to be digested is introduced into a container with an amount of a digesting agent suitable for effecting digestion. Afterwards, a self-opening and self-closing valve adapted for functioning as a pressure relief valve at a predetermined internal pressure, is placed over the mouth of the container. The valve includes a pressure-deformable, resilient wall member having an outlet port, and an obstructing element engaged in a tight sealing relationship with an inside surface of the wall member or with an inner surface of the outlet port. Then, the container is tightly closed, and sufficient microwave energy to digest the sample is applied to the contents of the closed container. Afterwards, the application of microwave energy is discontinued. and the digested sample is recovered.

In addition, other methods as defined in claims 4 and 6 using the lidded vessel/valve combination of the present invention are provided. These methods include use in canning, sterilization and fluid dispensing.

Reference is now made to the accompanying drawing, which forms a part of the specification of the present invention, and which depicts preferred embodiments of an improved valve in accordance with the present invention and uses of the improved valve.
Figure 1 is an isometric view of the components of a lidded vessel employing a very highly preferred embodiment of a valve in accordance with the present invention;
Figure 2 is a cross-sectional view of the lid of the lidded vessel of Figure 1 along the line 2--2;
Figure 3 is a sectional view of the assembled lidded vessel and member 12 of Figure 1 taken in a plane through the central assembly axis, showing the valve in closed position and depicting contents in phantom within the lidded vessel;
Figure 4 is a sectional view identical to that of Figure 3, except that the valve is shown in open position in response to a certain fluid pressure within the lidded vessel;
Figure 5 is a sectional view of a second preferred embodiment of a valve in accordance with the present invention taken in a plane through the central assembly axis of a lidded vessel utilizing the valve, showing the valve in closed position;
Figure 6 is a sectional view identical to that of Figure 5, except that the valve is shown in open position;
Figure 7 is a perspective view of an element shown in cross-section in Figures 5 and 6;
Figure 8 is a perspective view with a partial cutaway of a microwave system containing the assembled lidded vessel and member of Figure 1, with a cutaway of a vertical wall of the lidded vessel container to show a fluid within the container; and
Figure 9 is a schematic showing use of the lidded vessel and member of Figures 5 and 6, for discharging a fluid at a predetermined temperature, with a cutaway of a vertical wall of the vessel to show fluids within the vessel.

As explained earlier, the present invention is directed to an improved valve. More particularly, this invention relates to a self-regulating valve that opens and closes in response to a change in the physical environment of the valve, in particular to a change in internal fluid pressure. In a preferred embodiment, this improved valve is also temperature sensitive, and therefore able to respond not only to internal fluid pressure but also to temperature change. In this embodiment, the components of the valve can amazingly be made of the same material. Also in this embodiment, the valve is microwave radiation transparent and is therefore useful as a relief valve in a microwave system-based, closed vessel digestion technique, even when the digestion generates gas. In a very preferred embodiment, the improved valve is highly chemically inert and accordingly corrosion resistant. Also in a preferred embodiment, the improved valve of this invention can be manually opened.

Also as explained earlier, our invention is directed to a lidded vessel employing this improved valve, to an apparatus including a microwave system and this lidded vessel, and to methods using the improved valve.

The term "fluid" as used in our description of the present invention and in the claims, means a liquid, gas or vapor, and the terms "upper", "lower", "above", "below", "upward" and "downward" are intended to designate relative orientation of the valve as shown in the Figures.

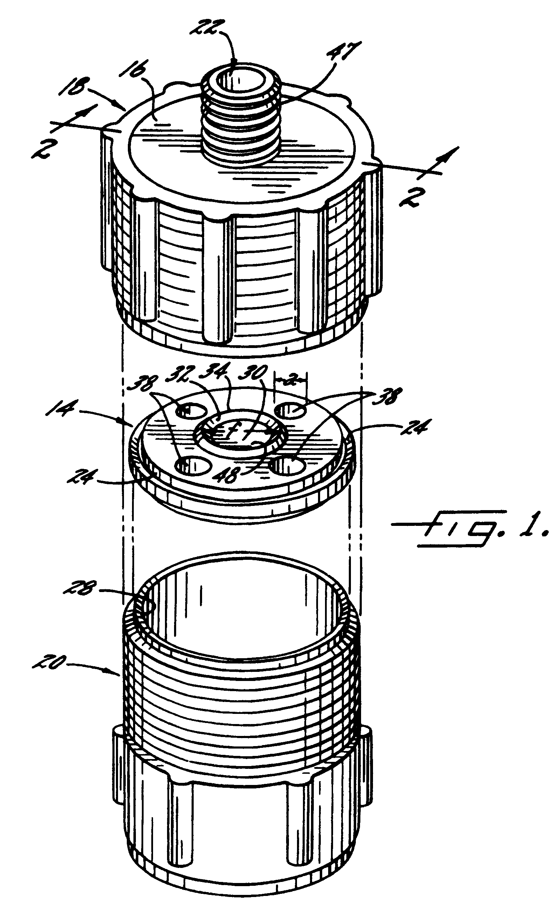

Figures 1, 3 and 4 depict a lidded vessel 10 utilizing a very highly preferred embodiment of a valve 12 in accordance with the present invention. Valve 12 is formed by a disc-shaped member 14, and a deformable, resilient top wall (wall member) 16 of a lid 18 of a hollow receptacle or container 20. Centrally located in the lid is a fluid outlet port 22.

Preferably, disc-shaped member (disc) 14 and the entirety of lidded vessel 10 are formed of a deformable, resilient, thermoplastic material, that is very preferably the same for each of member 14, the lid and the container. Even more preferably, this material is the fluorocarbon copolymer described earlier. Preferably, the cross-sectional thickness of disc 14 imparts semi-rigidity to the disc.

Disc 14 has a peripheral wall surface 24 that conforms to an upper inside wall surface 26 of the lid, and enables the disc to be locked in place between the lid and an upper rim 28 of container 20. Encircling, and spaced apart from, a center 30 of the disc is a raised abutment ring (obstructing means) 32 having a peak (valve seat) 34, which provides line contact between the disc and an inner top surface 36 of wall member 16. As can best be seen in Figure 1, located between ring 32 and peripheral wall surface 24 are apertures 38, each having a flow area "A", defined by a diameter "a".

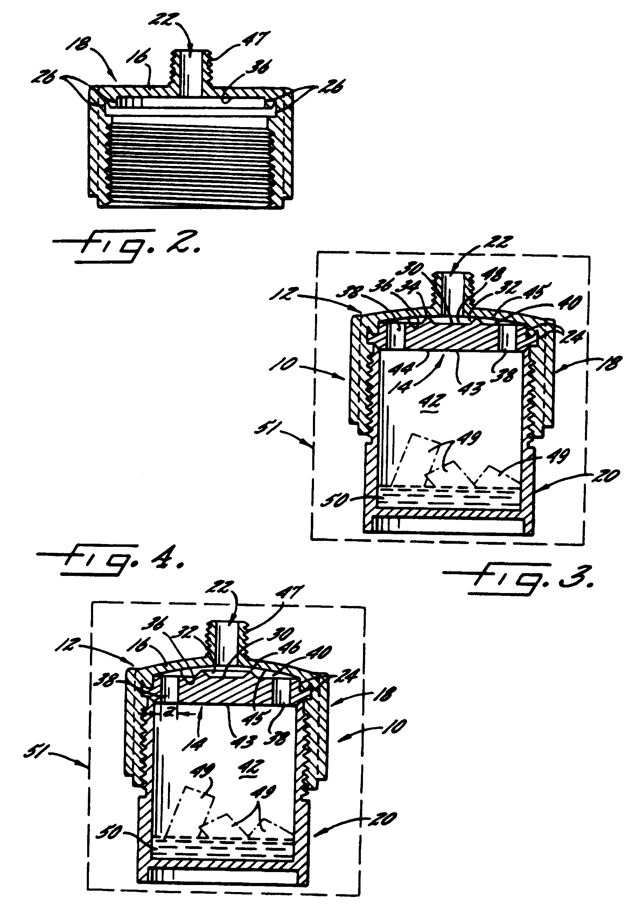

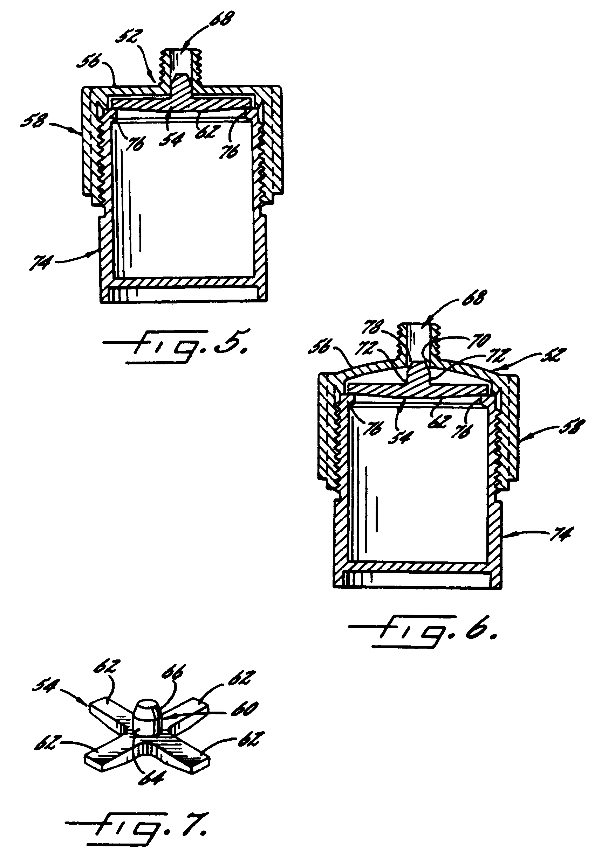

With reference to Figure 3, which shows valve 12 in closed position, the abutment ring peak of semi-rigid disc 14 pushes against flexibly deformable, wall member 16 so as to cause it to bulge outwardly. Outward bulging of the wall member is seen by comparison to the undistorted lid shown in Figure 2. The point contact provided by the abutment ring peak produces a tight sealing relationship between ring 32 and inner top surface 36.

Peak 34 is appropriately spaced apart from center 30 of the disc such that it surrounds outlet port 22 of the lid, thereby obstructing flow through the outlet port. The outlet port and abutment ring could be offset from the central assembly axis, provided that they are so located relative to one another in the assembled valve, that the abutment ring peak surrounds the outlet port.

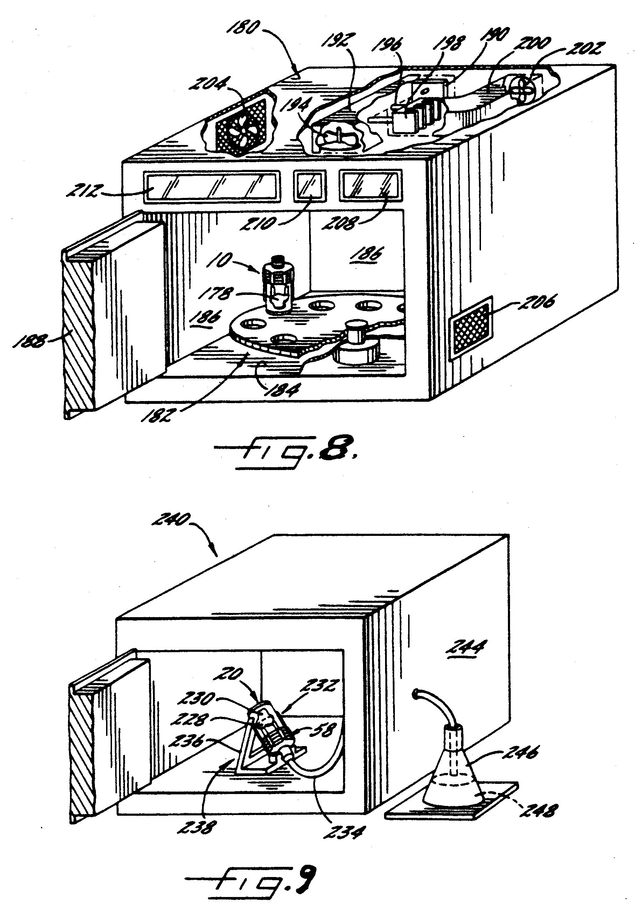

As shown in Figures 3 and 4, disc 14 divides lidded vessel 10 into compartments 40 and 42. Apertures 38 permit internal fluid pressure to be equally exerted against wall member 16 and other walls of the lidded vessel. The number of apertures, whether one or many, is not critical; rather, the sum of areas "A" of the apertures should not restrict flow to the cap.

So long as the force of the internal fluid pressure acting on wall member 16 is less than or only equal to the pressure of abutment ring 32 against the wall member, valve 12 remains closed. Internal fluid pressure pushing against a central area 43 of a lower disc surface 44, assists the mechanical pressure exerted by the abutment ring to strengthen the tight sealing relationship between peak 34 and inner top surface 36. Hence, the force of internal fluid pressure is utilized to enhance closure of the valve. Central area 43 is defined by a diameter "f" of the abutment ring peak.

A donut-shaped area 45, which consists of the area of inner top surface 36 outside the abutment ring peak, is conveniently greater than central area 43. Since the wall member is more flexible than the disc, central area 43 could be greater than area 45.

If, as illustrated in Figure 4, the force of the internal fluid pressure impinging on the top of wall member 16 should exceed the pressure of abutment ring 32 against the wall member 16 the wall member is lifted away from sealing contact with abutment ring peak 34, and valve 12 is opened. A gap 46 is created between peak 34 and inner top surface 36, through which pressure is released from the lidded vessel, via fluid outlet port 22.

When a sufficient reduction in the force of the internal fluid pressure acting on the wall member has occurred, the resiliency of deformable, resilient wall member 16 causes disc 14 and inner top surface 36 to reseat in a tight sealing relationship, thereby closing the valve.

Should the force of the internal fluid pressure impinging on the top again exceed the pressure of the abutment ring against the wall member, valve 12 will reopen, until the fluid pressure within the lidded vessel drops sufficiently for the valve to reclose. Thus, opening and closing of the valve in response to the internal fluid pressure within the lidded vessel, recurs as required.

The internal fluid pressure required to open valve 12 is controlled by factors including the height and the diameter of abutment ring peak 34, and the flexibility of the top of wall member 16. For example, the greater the height of peak 34, the relatively greater the pressure needed; the greater the diameter of the ring peak, the relatively greater the pressure required; and the more flexible wall member, the relatively less pressure needed. Accordingly, by selection for example of an appropriate peak height or ring peak diameter, the valve can be made to open at a predetermined internal pressure.

Attention is invited to our later description, which illustrates the relationship between diameter of the ring peak and the internal pressure needed to open valve 12. As described later, valve 12 is responsive not only to internal fluid pressure but also to temperature change.

If disc 14 were flexible, rather than semi-rigid, the disc would be seen bowed downwardly in Figure 3 and wall member 16 would show less outward bulging. For a constant height of peak 34 and diameter of ring 32, a relatively higher internal pressure would be needed to open valve 12, if the disc were flexible, rather than semi-rigid. If, on the other hand, the disc were rigid rather than semi-rigid, internal pressure pushing against central area 43 of the lower disc surface would not strengthen the tight sealing relationship between peak 34 and inner top surface 36. When the disc is flexible, the internal pressure required for valve opening is less predictable than when the disc is rigid or semi-rigid.

When used with a lidded vessel, valve 12 is operable regardless whether a small volume of liquid is used, or the lidded vessel is filled to capacity.

Advantageously, valve 12 can be manually opened by exerting finger pressure against an outer wall 47 of the outlet port in a direction generally perpendicular to the central assembly axis of the valve. This type of finger pressure will move inner top surface 36 out of the tight sealing relationship with the abutment ring peak. Valve 12 can be maintained open by pressure exerted through the outlet port on an upper disc surface 48.

Figures 3 and 4 depict lidded vessel 10 containing in phantom, solids 49 and a liquid 50, to which microwave energy is applied by means of a microwave 51, also shown in phantom. Microwave 51 could be the microwave system illustrated in Figure 11. Solids 49 may be, for example, a sample to be digested such as a gas-generating tissue sample. In this case, liquid 50 would be a digesting agent such as an acid-digesting agent. Solids 49 may also be a food product to be canned using microwave energy, in which case liquid 50 would contain water; or solids 49 may be objects to be sterilized using microwave energy, in which case liquid 50 would include water.

To take advantage of the manual release feature of valve 12, lidded vessel 10 could contain a fluid as shown in Figure 11, to which microwave energy is applied to heat the fluid and build up internal pressure for manual release of the warm or hot fluid. Exemplary fluids include, but are not limited to, a gas, a foam, a semi-fluid mixture such as a slurry, or a liquid such as a semi-solid or an emulsion. Illustrative semi-solids include gels and pastes.

For example, container 20 could be filled with a suitable shaving cream composition, and the lidded vessel assembled with disc-shaped member 14 in place. The contents of the assembled vessel could then be heated by microwave radiation for a desired period of time. The lidded vessel could then be inverted, and valve 12 manually opened to release a warm or hot shaving cream composition. It will be appreciated that the lidded vessel is refillable, as the lid could be removed and additional material could be added to the container for dispensing or discharge.

Figures 5-7 show a second preferred embodiment of a valve in accordance with the present invention. Valve 52 is formed by a spider member 54, and a deformable, resilient top wall 56 of a lid 58. Preferably, spider member 54 and the entirety of lid 58 are formed of a deformable, resilient, thermoplastic material, that is very preferably the same for member 54 and lid 58. Even more preferably, this material is the fluorocarbon copolymer described earlier.

Spider member 54, which is preferably semi-rigid, includes a pin part 60 and preferably leg parts 62. Pin part 60 has a stem portion 64 that preferably terminates in an inwardly tapered tip portion 66. Suitably, approximately the last 2.5 mm of the stem portion are tapered.

A fluid outlet port 68 is conveniently centrally located in lid 58. An inner surface 70 of the outlet port conforms to a peripheral wall surface 72 of stem portion 64. Preferably, the stem portion is cylindrically shaped. Peripheral wall surface 72 of the stem portion fits snugly against the inner surface of the outlet port to provide a tight sealing relationship.

Preferably, the tip portion of the pin part has an inward taper of about 2-3°. This angle of taper provides for slow, controlled pressure release through the valve, and furthermore assists reseating of the pin part in the outlet port, during valve closing.

When valve 52 is used with, for example, a receptacle 74, the receptacle is advantageously provided with an inner lip 76 that preferably is continuous. The inner lip provides support to the spider member that is particularly beneficial when the valve is open, as shown in Figure 6. When the valve is open, inner lip 76 allows the free floating spider member to be self-centering, as the stem portion is able to seek a tight sealing relationship with the inner surface of the outlet port.

So long as the force of the internal fluid pressure acting on lid top 56 is insufficient to overcome the tight sealing relationship provided by the friction fit between the stem portion and the outlet port, valve 52 remains closed, as illustrated in Figure 5. If, as shown in Figure 6, the force of the internal pressure impinging on the lid top should be sufficient to overcome the tight sealing relationship, the valve is opened. Fluid pressure is released through a gap 78 and then from the lidded vessel via the outlet port. Leg parts 62 of the spider member prevent expulsion of pin part 60 through the outlet port.

The release of fluid pressure through port 68 reduces the pressure within the lidded vessel. After sufficient pressure has been released, the resiliency of deformable, resilient top wall 56 of the lid assists reseating of the spider member and the outlet port in a tight sealing relationship, thereby closing the valve. The valve will reopen and reclose as necessary in response to internal fluid pressure within the lidded vessel.

The internal pressure required to open valve 52 may be controlled by the height of stem portion 64. More specifically, the greater the height of the stem portion, the relatively greater the internal pressure needed, whereas a shorter stem portion requires relatively less internal pressure. Accordingly, the valve can be made to open at a predetermined internal pressure by selecting an appropriate height for the stem portion.

Similar to valve 12, valve 52 is operable in conjunction with a lidded vessel, regardless whether a small volume of liquid is used or the lidded vessel is filled to capacity.

It will be noted that the fluid pressure opening valve 12 is in the same upward direction as the mechanical pressure being exerted on deformable wall member 16.

Preferably, the same material is used to form all components of our improved valve. As a result, one valve component will not become hotter than another valve component. The containers of the lidded vessels of Figures 1 and 3-6 are preferably formed of the same material as the pressure-deformable wall member, which results in a vessel-protecting effect. However, in some applications, a valve in accordance with the present invention is used with a container formed of a different material. For example, the valve could be formed of thermoplastic components, but the container could be formed of glass.

For use in a microwave system, the improved valve of the present invention should be microwave radiation transparent. This characteristic is achieved if the valve is made of a microwave-transparent, thermoplastic material. Preferably, the same material is used to form all valve components. Exemplary microwave-transparent, thermoplastic materials include, but are not limited to, polypropylene, polyethylene, polypropylene/polyethylene copolymers, and the fluorocarbon copolymer described earlier. The fluorocarbon copolymer advantageously provides a high temperature, corrosion-resistant valve.

As later described in more detail, a valve in accordance with the present invention is temperature sensitive when the pressure-deformable wall member thereof is made of a thermoplastic material. Illustrative thermoplastic materials for providing a temperature sensitive valve include those just described. Advantageously, a useful thermoplastic material is moldable and precision machinable.

An eminently useful microwave system for digestion procedures is characterized by a corrosion-resistant interior chamber, a corrosion-resistant exhaust system capable of providing high volume air flow through the chamber, means for absorbing excess reflected radiation, and a computer-controlled variable power source. A microwave system of this type is commercially available. The microwave system is later described in more detail.

Further details of the present invention are now provided based on trials carried out in such a microwave system, using a valve in accordance with the present invention as a relief valve for a lidded digestion vessel, Water is added to the vessel, the lid of which is provided with a vent port, and the lidded vessel is assembled with semi-rigid, disc-shaped member 14 in place, to form valve 12. Member 14, which is made of the thermoplastic fluorocarbon copolymer described earlier, has an abutment ring peak that is 1.57 mm high, and four apertures equally spaced around the abutment ring, each with a diameter of 3 mm. The lower disc surface has a diameter of 39 mm. When the diameter of the abutment ring peak is 13 mm, this valve opens at about 410 kPa internal pressure. In comparison, if the diameter across the ring peak is 16 mm, the valve opens at approximately 550 kPa internal pressure, and if the ring peak diameter is 19 mm, the valve opens at about 650 kPa internal pressure.

A valve in accordance with the present invention in which the pressure-deformable, resilient wall member is made of a thermoplastic material, is not only pressure sensitive but also temperature sensitive: as the temperature of the pressure-deformable wall member increases, elasticity of the material thereof increases, and the valve opens at a relatively lower pressure. For example, as just described, when the disc of valve 12 has a ring peak diameter of 13 mm, the valve opens at about 410 kPa for water. In this instance, vapors within the lidded vessel, result in top wall member 16 of the lid being at a temperature of approximately 150° C. In contrast, if a liquid were used having a boiling point appropriate for producing a lid top temperature of about 60° C, the valve would open at approximately 760 kPa internal pressure.

When using valve 12 for closed vessel digestions, the manual opening feature of the valve makes it possible to check for high pressure within the closed vessel, prior to opening the closed vessel to remove a digested sample.

In carrying out a closed vessel digestion, it will generally be undesirable for the relief valve to open, as digesting agent fumes may escape. However, when the digestion generates a gas, opening and reclosing of the valve will be beneficial.

A trial of valve 52 as a relief valve for the lidded digestion vessel, is now described. Water is added to the vessel, and the lidded vessel is assembled with semi-rigid, spider member 54, made of the thermoplastic, fluorocarbon copolymer described earlier. in place. The stem portion of the integral pin part of member 54, has a height of 6 mm, and the tip portion of the pin part tapers inwardly at an angle of 2° and is 3 mm high. The lidded vessel is placed within the microwave system, and application of microwave energy is begun. When top wall 56 of the lid is at a temperature of approximately 150° C, the valve opens at about 550 kPa internal pressure.

As can be seen, a valve in accordance with the present invention, is capable of containing a high pressure, that is, a pressure of more than 340 kPa. Accordingly, the improved valve makes possible a closed vessel digestion at high pressure, with the strength of the lidded vessel walls being an important limitation on the internal pressure. For example, we experienced a blowout of a bottom wall of the lidded digestion vessel at about 1000 kPa. In contrast, the prior art, closed vessel digestion procedures described earlier, experienced leakage at considerably lower pressures. High pressure digestions should further reduce digestion time.

A thermoplastic lidded vessel such as vessel 10 may be heat treated to reduce deformability of the walls thereof. Heat treating or annealing is carried out at an appropriate temperature for a suitable period of time to obtain walls having the desired reduced deformability. For example, lidded vessel 10 could be heated at about 200° C for about 72 hours.

Figure 8 illustrates the above mentioned microwave system in detail, and shows the use of this microwave system with lidded vessel 10, which contains a fluid 178 for manual dispensing. Microwave system 180 includes an internal chamber 182 formed by a floor 184, sidewalls 186, a ceiling (not shown), and a door 188. The inner surface of each of these internal chamber-forming components is corrosion resistant, for example, coated with a fluorocarbon resin such as Teflon .

A conventional magnetron (power means) 190 is conveniently located outside of the internal chamber, and a wave guide 192 is employed to direct the microwave radiation into the internal chamber. The magnetron is controllable within the limits of 0 to 100 percent power input, suitably in one percentage point increments. A radiation mixer 194 for mixing and dispersing the radiation, is advantageously positioned between the magnetron and the internal chamber, to reduce the production of hot spots, which could decompose or destroy part of a sample in the internal chamber.

Between the magnetron and the internal chamber, a radiation isolator 196 is advantageously located in the wave guide, for absorbing excess reflected radiation to prevent damaging reflection back to the magnetron. Isolator 196 includes magnetic shapes coupled with heat sinks. The isolator permits originating microwaves emitted from the magnetron to pass through unaffected, but absorbs reflected waves. In fact, the isolator has a propensity for attracting reflected radiation and thus will tend to draw reflected radiation out of the internal chamber.

The isolator converts the reflected radiation to heat, which is dissipated through an isolator heat exchanger 198. A heat exchanger duct 200 communicates with the heat exchanger and a fan 202, which draws off the produced heat. Fan 202 and the isolator are able to absorb the full capacity of reflected energy for a zero load, i.e., an empty internal chamber, for prolonged, indefinite operation. Zero load operation enables microwave energy to be rapidly and effectively concentrated on any given sample size, even a sample having a small mass of polar material present. Total drying can be effected without damage to the magnetron and without a competing radiation absorber being present in the internal chamber.

As an alternative to isolator 196, a competing radiation absorbing material such as water, could be circulated through the internal chamber in radiation transparent tubing. For example, a loop of radiation transparent tubing could be conveyed through the internal chamber flooring or sidewalls from a reservoir. The temperature rise created by the absorption of radiation would effect circulation of the water through the tubing from the reservoir. A drawback of this approach is that a radiation absorber competes for radiation energy in the chamber, which can defeat heating of a small sample to near total dryness due to preferential absorption of the radiation by the larger mass of the radiation absorber.

A corrosion resistant, exhaust fan 204 is provided for removal of vapors from the internal chamber. An air intake panel 206 provides for flow of air into the chamber. As the volume of air flow through the internal chamber is important in certain applications of microwave system 180, the exhaust fan is advantageously a variable speed fan. The fan is capable of providing high volume air flow through the chamber. By "high volume air flow" is meant on the order of 100 scfm or higher.

The magnetron power input, duration of power input, and exhaust fan are advantageously computer-controlled, as selectively programmed prior to operation. For this purpose, microwave system 180 has a control panel 208, a numerical input panel 210 and a digital readout panel 212.

As described earlier with reference to Figures 3 and 4, the self-regulating valve of the present invention can be used with a microwave system, not only for digesting a sample but also for home canning and sterilizing an object.

A preferred method of use of an improved valve in accordance with the present invention, for closed vessel digestion is now described with reference to Figures 3 and 4. Lidded vessel 10 is used with, for example, disc-shaped member 14. Lid 18 is advantageously formed of a thermoplastic material, as a result of which valve 12 is responsive to pressure and temperature. The diameter of the abutment ring peak of member 14 is of appropriate size to cause the valve to open as a pressure relief valve, at a predetermined internal pressure and temperature suitable for the particular closed vessel digestion to be carried out.

A tissue sample 49 such as oyster tissue, and a suitable amount of a liquid-digesting agent 50 such as a 50:1 mixture of concentrated nitric acid and hydrofluoric acid, are introduced into container 20. Member 14 is positioned on the mouth of the container, and the container is tightly closed using lid 18. The amount of the liquid digesting agent depends on the sample size.

The tightly closed jar is placed into internal chamber 182 of the microwave system, and microwave energy is applied thereto. Digestion of the tissue sample generates gas. At the predetermined internal pressure and temperature, valve 12 opens to release the gas generated, acid fumes and vapors. After sufficient internal pressure has been relieved, the valve closes. The valve then reopens and recloses as necessary, in response to the internal pressure and temperature. When the digestion is complete, microwave energy is no longer applied, and the digested sample-containing lidded vessel is removed from the internal chamber.

A preferred method of use of an improved valve in accordance with the present invention, in home canning, is now described. In this method, a conventional glass canning jar could be utilized with lid 18 and, for example, disc-shaped member 14, which are appropriately dimensioned for use with the glass jar. The lid is advantageously formed of a thermoplastic material, as a result of which valve 12 is responsive to pressure and temperature. The diameter of the abutment ring peak of member 14 is of appropriate size to cause valve 12 to open at a predetermined pressure and temperature suitable for home canning.

A food product to be canned and a small amount of a liquid such as water, are introduced into the glass jar, member 14 is positioned on the mouth of the jar, and the jar is tightly closed using lid 18. The liquid could be an aqueous solution or juices from the food product.

The tightly closed jar is placed into an internal chamber of a conventional microwave appliance or of the above-mentioned microwave system, and microwave energy is applied thereto. A portion of the water is vaporized into steam, which passes up through the food product to assist in sterilization of the food product, and builds up pressure within the closed jar. At the predetermined pressure and temperature, valve 12 opens and the steam escapes through the valve, expelling air from within the closed jar. The liquid contains sufficient water, upon being converted to steam, to assist in the sterilization and to expel the air.

After steam has escaped through the valve for a suitable period of time, microwave energy is no longer applied, and the jar is removed from the internal chamber for cooling. At an appropriate internal pressure and temperature, valve 12 closes, without inflow of air into the jar. Further cooling occurs to form a vacuum within the lidded jar.

When it is desired to eat the canned food product, valve 12 is manually opened to break the vacuum, the lid is unscrewed and removed, and member 14 is removed. The lid, member 14, and the glass jar may then be reused.

An improved valve in accordance with the present invention, is similarly used for sterilizing an object. Following the procedure just described for home canning, tweezers to be sterilized are put into the glass canning jar, with a small quantity of a water-containing liquid. The diameter of the abutment ring peak of member 14 is of appropriate size to cause valve 12 to open at a predetermined internal pressure and temperature suitable for sterilization.

The tightly closed jar is placed into internal chamber 182 of the microwave system, which is unaffected by the introduction of a metal object into the internal chamber thereof. The liquid contains sufficient water, upon being converted to steam, to assist in the sterilization and to expel the air. After sterilization is completed, sterile air may be drawn into the jar through manually opened valve 12 if it is desired to break the vacuum prior to use of the tweezers.

The self-regulating valve of the present invention can be also used with a microwave system for enabling chemical starting materials to be reacted at a desired pressure and temperature, and dispensing or discharging the reaction product at a desired temperature; or for simply dispensing or discharging a fluid at a desired temperature. Exemplary fluids include, but are not limited to, a gas, a foam, a semi-fluid mixture such as a slurry, or a liquid such as a semi-solid or an emulsion. Illustrative semi-solids include gels and pastes. Use of the valve for dispensing or discharging a fluid at a desired temperature avoids the need for temperature-sensing devices and related temperature-actuated devices.

Figure 9 schematically illustrates the use of a valve in accordance with the present invention, for enabling fluids 228 and 230 to be reacted or combined at a desired pressure and temperature, and discharging the resulting product at a desired temperature. The fluids are depicted in the Figure with a dotted line representing the interface of the two fluids. Fluids 228 and 230 could be, for example, two liquid chemical starting materials or two immiscible liquids.

In Figure 9, receptacle 20 and lid 58 are employed with, for example, spider member 54 (not shown). The lid is formed of a thermoplastic material, as a result of which valve 52 (not shown) is responsive to pressure and temperature. The height of stem portion 64 (not shown) is appropriate to cause the internal pressure to increase to the desired pressure for reaction or combination to occur, and to cause the valve to discharge the resulting product at the desired temperature.

For purposes of illustration, Figure 9 is further described for two liquid chemical starting materials 228 and 230, unreactive at atmospheric pressure but reactive at a certain pressure in excess of atmospheric pressure. These liquids are added to receptacle 20, and a lidded vessel 232 is assembled with the spider member in place. A hose 234 is attached to the outlet port (not shown) of the lid, and the assembled apparatus is inverted and placed onto a holder 236 located in an internal chamber 238 of a microwave system 240. The hose is passed through an opening in an exterior wall 244 of the microwave system, and fed into a reaction flask 246 containing a liquid chemical 248 for reaction with the reaction product.

Microwave energy is applied to the starting materials, and vaporization occurs to produce a sufficient pressure for the starting materials to react. At a predetermined temperature, valve 52 opens to discharge the reaction product from the lidded vessel into the reaction flask for reaction with liquid chemical 248 at the desired temperature.

Alternatively, two immiscible liquids 228 and 230 that form an emulsion at a pressure in excess of atmospheric pressure, could be introduced into lidded vessel 232, to be discharged at a predetermined temperature as an emulsion. In this instance, the stem portion of the spider member would have an appropriate height for allowing sufficient pressure build up to effect emulsification, prior to the valve discharging the emulsion.

Also, fluids 228 and 230 could represent water and air, for providing "instant" steam. This is achieved by placing water into lidded vessel 232, and using the valve to discharge superheated water, which would convert to steam at atmospheric pressure. In this example, the stem portion would be an appropriate height for allowing sufficient pressure and temperature build up for discharge of superheated water.

If it were desired to discharge or dispense a gas or a vapor at a desired temperature using lidded vessel 232, inversion of the lidded vessel would not be necessary.

The manual release feature of, for example, valve 12 may also be used for discharging, for purposes of illustration, a pressurized fluid such as grease, from a hose or conduit, on one end of which disc-shaped member 14 and a closure element are in place.

## Claims

1. Apparatus which comprises a microwave system (180) and a lidded vessel (10) including a container element (20) and a normally closed, self-closing and self-opening valve assembly (12), in which the valve assembly (12) comprises a wall member (16) being part of the lid (18) of the lidded vessel (10) and having an outlet port, and obstructing means (32) normally engaged with a part of said wall member to block outflow through the outlet port (22), and which valve assembly (12) is adapted such that internal fluid pressure impinging on the wall member (16) permits outflow through the outlet port (22), characterized
in that the wall member (16) is a pressure-deformable, resilient wall member (16) which initially has a mechanical pressure induced outwardly dome-shaped form, in that said obstructing means (32) is normally engaged with said wall member or with said outlet port, whereby internal fluid pressure impinging on the wall member (16) causes outward bulging of the wall member (16) thereby permitting the outflow.

2. Apparatus as claimed in claim 1, in which the microwave system comprises a corrosion-resistant chamber (182), a corrosion-resistant exhaust system capable of providing high volume air flow through the chamber, means for absorbing excess reflected radiation (196), and computer-controlled variable power means (190).

3. A closed vessel digestion method, which comprises the following steps:
(a) introducing a sample to be digested and a digesting agent therefor, into a container;
(b) placing a valve assembly as defined in claim 1, onto the container;
(c) digesting the sample by applying microwave energy to the contents of the closed container, whereby an internal fluid pressure may be produced that causes deformation of the wall member of the valve assembly, thereby permitting outflow through the outlet port; and
(d) recovering the digested sample from the container.

4. A method for producing a sterile object in a sealed container, which comprises the following steps:
(a) introducing an object and water into a container;
(b) placing a valve assembly as defined in claim 1, onto the container, the wall member of the valve assembly being formed from a thermoplastics material;
(c) sterilizing the object by applying microwave energy to the contents of the closed container, wherein an internal pressure is produced that causes outward bulging of the wall member, thereby permitting outflow through the outlet port; and
(d) cooling the container.

5. A method as claimed in claim 4, in which the object is a foodstuff and the product is a canned food.

6. A method for dispensing a fluid at a predetermined temperature, which method comprises the following steps:
(a) introducing the fluid into a container;
(b) placing a valve assembly as defined in claim 1, onto the container, the wall member of the valve assembly being formed from a thermoplastics material and being adapted to dispense fluid at the predetermined termperature;
(c) applying microwave energy to the fluid in the closed container so that the fluid reaches the predetermined temperature, whereby deformation of the wall member is caused thereby permitting fluid outflow through the outlet port.

7. A lidded vessel including a container element (74) and a normally closed, self-opening and self-closing valve assembly (52), in which the valve assembly (52) comprises a planar wall member (56) being part of the lid of the lidded vessel and having an outlet port (68), and obstructing means (60) normally co-operating with the outlet port (68) to form a valve seal, and which valve assembly (52) is adapted such that internal fluid pressure impinging on the wall member (56) breaks the valve seal to permit outflow through the outlet port (68), characterized
in that the wall member (56) is a pressure-deformable, resilient wall member (56), in that said obstructing means (60) is a pin-shaped free-floating part integral with separate means (62) for preventing expulsion of said obstructing means (60) through the outlet port (68) to the outside, in that the container element (74) supports said expulsion-preventing means (62), whereby internal fluid pressure impinging on the wall member (56) causes deformation thereof thereby breaking the valve seal, and allowing said obstructing means (60) to be self-centering for re-forming the valve seal.

8. A lidded vessel as claimed in caim 7, in which the tip (66) of the pin-shaped part (60) tapers to a degree adapted to allow controlled fluid pressure release.

9. A lidded vessel as claimed in claim 7 or 8. in which the valve assembly (52) and container element (74) are formed from the same thermoplastics material.

10. A lidded vessel as claimed in any one of claims 7 to 9, which additionally contains a fluid selected from liquids, water, emulsions. semi-solids, gels, pastes, foams, semi-fluid mixtures, slurries and gases.

11. Apparatus and lidded vessel according to claims 1, characterized in that the outlet port comprises an outer wall (47) for manually opening the valve assembly (12) by lateral pressure exerted manually, for bringing the valve seat of the valve assembly out of alignment of the obstructing means (14).

## Patentansprüche

1. Vorrichtung mit einem Mikrowellensystem (180) und einem mit einem Deckel versehenen Gefäß (10) mit einem Behälterelement (20) und einer normalerweise geschlossenen, selbstschließenden und selbstöffnenden Ventilanordnung (12), bei der die Ventilanordnung (12) ein Wandelement (16) aufweist, das Teil des Deckels (18) des mit einem Deckel versehenen Gefäßes (10) ist und eine Auslaßöffnung aufweist, und mit einer Sperrvorrichtung (32), die normalerweise mit einem Teil des Wandelements in Eingriff steht, um das Ausfließen durch die Auslaßöffnung (22) zu blockieren, und wobei die Ventilanordnung (12) so ausgelegt ist, daß der Fluidinnendruck, der auf dem Wandelement (16) auftrifft, das Ausfließen durch die Auslaßöffnung (22) ermöglicht, dadurch **gekennzeichnet,** daß das Wandelement (16) ein unter Druck verformbares und elastisches Wandelement (16) ist und zu Beginn eine durch mechanischen Druck verursachte Kuppelform nach außen aufweist, daß die Sperrvorrichtung (32) normalerweise mit dem Wandelement oder mit der Auslaßöffnung in Eingriff steht, wodurch der auf das Wandelement (16) auftreffende Fluidinnendruck eine Ausbauchung des Wandelements (16) nach außen bewirkt, wodurch das Ausfließen ermöglicht wird.

2. Vorrichtung nach Anspruch 1, bei welcher das Mikrowellensystem eine korrosionsbestandige Kammer (182), ein korrosionsbestandiges Abführungssystem, das einen Luftstrom von hohem Volumen durch die Kammer bereitsstellen kann, Einrichtungen zur Absorption von übermäßiger reflektierter Strahlung (196) und computergesteuerte variable Energieeinspeiseeinrichtungen (190) aufweist.

3. Bei geschlossenem Gefäß durchgeführtes Digestionsverfahren, das die folgenden Schritte aufweist:
(a) Zuführen einer zu digerierenden Probe und eines Digestionssagens dafür in einen Behälter;
(b) Anordnen einer Ventilanordnung nach Anspruch 1 auf dem Behälter
(c) Digerieren der Probe durch Aufbringen von Mikrowellenenergie auf den Inhalt des geschlossenen Behälters, wodurch ein Fluidinnendruck erzeugt werden kann, durch den das Wandteil der Ventilanordnung verformt wird, wodurch ein Ausfließen durch die Auslaßöffnung ermöglicht wird; und
(d) Wiederentnehmen der digerierten Probe aus dem Behälter.

4. Verfahren zur Erzeugung eines sterilen Gegenstandes in einem abgedichteten Behälter, das die folgenden Schritte aufweist:
(a) Zuführen eines Gegenstandes und von Wasser in einen Behälter;
(b) Anordnen einer Ventilanordnung nach Anspruch 1 auf dem Behälter, wobei das Wandteil der Ventilanordnung aus einem thermoplastischen Material gebildet ist.
(c) Sterilisieren des Gegenstandes durch Aufbringen von Mikrowellenenergie auf den Inhalt des geschlossenen Behälters, wobei ein Innendruck erzeugt wird, der eine Ausbauchung des Wandteils nach außen bewirkt, wodurch ein Ausfließen durch die Auslaßöffnung ermöglicht wird; und
(d) Abkühlen des Behälters.

5. Verfahren nach Anspruch 4, bei welchem der Gegenstand ein Nahrungsmittel und das Erzeugnis eingedoste Nahrung ist.

6. Verfahren zur Abgabe eines Fluids bei einer vorbestimmten Temperatur, welches die folgenden Schritte aufweist:
(a) Zuführen des Fluids in einen Behälter;
(b) Anordnen einer Ventilanordnung nach Anspruch 1 auf dem Behälter, wobei das Wandteil der Ventilanordnung aus einem thermoplastischen Material gebildet und zur Abgabe von Fluid bei der vorbestimmten Temperatur geeignet ist.
(c) Aufbringen von Mikrowellenenergie auf das Fluid in dem geschlossenen Behälter, so daß das Fluid die vorbestimmte Temperatur erreicht, wodurch das Wandteil verformt und dadurch das Ausfließen von Fluid durch die Auslaßöffnung ermöglicht wird.

7. Mit einem Deckel versehenes Gefäß mit einem Behälterelement (74) und einer normalerweise geschlossenen, selbstöffnenden und selbstschließenden Ventilanordnung (52), bei der die Ventilanordnung (52) ein ebenes Wandelement (56), das Teil des Deckels des mit einem Deckel versehenen Gefäßes ist, und eine Auslaßöffnung (68) hat, und eine Sperrvorrichtung (60) aufweist, die normalerweise zur Bildung einer Ventildichtung mit der Auslaßöffnung (68) zusammenwirkt, und wobei die Ventilanordnung (52) so ausgelegt ist, daß der auf das Wandelement (56) auftreffende Fluidinnendruck die Ventildichtung öffnet, um das Ausfließen durch die Auslaßöffnung (68) zu ermöglichen, dadurch gekennzeichnet, daß das Wandelement (56) ein unter Druck verformbares und elastisches Wandelement (56) ist, daß die Sperrrvorrichtung (60) ein stiftförmiges freibewegliches Teil ist, das einstückig mit getrennten Vorrichtungen (62) ist, um ein Ausstoßen der Sperrvorrichtung (60) durch die Auslaßöffnung (68) nach außen zu verhindern, daß das Behälterelement (74) die den Austoß verhindernden Vorrichtungen (62) trägt, wodurch auf das Wandelement (56) auftreffender Fluidinnendruck dessen Verformung verursacht, dadurch die Ventildichtung öffnet und es der Sperrvorrichtung (60) ermöglicht, sich zur Wiederbildung der Ventildichtung, selbst zu zentrieren.

8. Mit einem Deckel versehenes Gefäß nach Anspruch 7, bei dem sich die Spitze (66) des stiftförmigen Teils (60) bis zu einem Grade verjüngt, der geeignet ist, gesteuerte Entspannung des Fluiddrucks zu ermöglichen.

9. Mit einem Deckel versehenes Gefäß nach Anspruch 7 oder 8, bei dem die Ventilanordnung (52) und das Behälterelement (74) aus dem gleichen thermoplastischen Material gebildet sind.

10. Mit einem Deckel versehenes Gefäß nach einem der Ansprüche 7 bis 9, das zusätzlich ein Fluid enthält, das aus Flüssigkeiten, Wasser, Emulsionen, halbfesten Stoffen, Gels, Pasten, Schäumen, halbfluiden Mischungen, Schlämmen oder Gasen besteht.

11. Vorrichtung und ein mit einem Deckel versehenes Gefäß nach Anspruch 1, dadurch gekennzeichnet, daß die Auslaßöffnung eine Außenwand (47) aufweist, um die Ventilanordnung (12) durch seitlichen Druck, der manuell aufgebracht wird, manuell zu öffnen, um den Ventilsitz der Ventilanordnung aus der Ausrichtung der Sperrvorrichtung (14) zu bringen.

## Revendications

1. Appareil qui comporte un système à micro-ondes (180) et un récipient (10) à couvercle comprenant un élément conteneur (20) et un ensemble à soupape normalement fermée (12) à fermeture automatique et à ouverture automatique, dans lequel l'ensemble à soupape (12) comporte un élément de paroi (16) faisant partie du couvercle (18) du récipient (10) à couvercle et ayant un orifice de sortie, et un moyen d'obturation (32) portant normalement contre une partie dudit élément de paroi pour arrêter un écoulement de sortie à travers l'orifice (22) de sortie, et lequel ensemble à soupape (12) est conçu de manière qu'une pression de fluide interne agissant sur l'élément de paroi (16) permette un écoulement de sortie à travers l'orifice de sortie (22),
caractérisé en ce que l'élément de paroi (16) est un élément de paroi élastique (16), déformable par la pression, qui présente initialement une forme en dôme vers l'extérieur, produite par une pression mécanique, en ce que ledit moyen (32) d'obturation porte normalement contre ledit élément de paroi (16) ou ledit orifice de sortie, afin qu'une pression de fluide interne agissant sur l'élément de paroi (16) provoque un bombement vers l'extérieur de l'élément de paroi (16), permettant ainsi l'écoulement de sortie.

2. Appareil selon la revendication 1, dans lequel le système à micro-ondes comporte une chambre (182) résistant à la corrosion, un système d'évacuation résistant à la corrosion capable de produire un écoulement d'air à volume élevé à travers la chambre, des moyens destinés à absorber un rayonnement réfléchi excédentaire (196) et des moyens (190) à puissance variable commandés par calculateur.

3. Procédé de digestion en récipient fermé, qui comprend les étapes suivantes consistant :
(a) à introduire un échantillon à digérer et un agent de digestion pour cet échantillon dans un conteneur ;
(b) à placer un ensemble à soupape selon la revendication 1 sur le conteneur ;
(c) à digérer l'échantillon par application d'énergie à micro-ondes au contenu du conteneur fermé, afin qu'une pression de fluide interne puisse être produite, laquelle provoque une déformation de l'élément de paroi de l'ensemble à soupape, permettant ainsi un écoulement de sortie à travers l'orifice de sortie ; et
(d) à récupérer du conteneur l'échantillon digéré.

4. Procédé pour produire un objet stérile dans un conteneur fermé hermétiquement, qui comprend les étapes suivantes consistant :
(a) à introduire un objet et de l'eau dans un conteneur ;
(b) à placer un ensemble à soupape selon la revendication 1 sur le conteneur, l'élément de paroi de l'ensemble à soupape étant formé en une matière thermoplastique ;
(c) à stériliser l'objet en appliquant de l'énergie à micro-ondes au contenu du conteneur fermé, afin qu'une pression interne soit produite, laquelle provoque un bombement vers l'extérieur de l'élément de paroi, permettant ainsi un écoulement de sortie à travers l'orifice de sortie ; et
(d) à refroidir le conteneur.

5. Procédé selon la revendication 4, dans lequel l'objet est une denrée alimentaire et le produit est un aliment en boîte.

6. Procédé pour distribuer un fluide à une température prédéterminée, lequel procédé comprend les étapes suivantes consistant :
(a) à introduire le fluide dans un conteneur ;
(b) à placer un ensemble à soupape selon la revendication 1 sur le conteneur, l'élément de paroi de l'ensemble à soupape étant formé en une matière thermoplastique et étant conçu pour distribuer un fluide à la température prédéterminée ;
(c) à appliquer de l'énergie à micro-ondes au fluide dans le conteneur fermé afin que le fluide atteigne la température prédéterminée, de façon qu'une déformation de l'élément de paroi soit provoquée, permettant ainsi un écoulement de sortie du fluide à travers l'orifice de sortie.

7. Récipient à couvercle comprenant un élément conteneur (74) et un ensemble à soupape (52), normalement fermé, s'ouvrant automatiquement et se fermant automatiquement, dans lequel l'ensemble à soupape (52) comporte un élément de paroi plan (56) faisant partie du couvercle du récipient à couvercle et ayant un orifice de sortie (68), et des moyens d'obturation (60) coopérant normalement avec l'orifice de sortie (68) pour former une fermeture hermétique de soupape, et lequel l'ensemble à soupape (52) est conçu de manière qu'une pression de fluide interne agissant sur l'élément de paroi (56) rompe la fermeture hermétique de soupape pour permettre un écoulement de sortie à travers l'orifice de sortie (68),
caractérisé en ce que l'élément de paroi (56) est un élément de paroi élastique (56), déformable par la pression, en ce que lesdits moyens d'obturation (60) comprennent une pièce en forme de pointeau, flottant librement, réalisée d'une seule pièce avec un moyen de séparation (62) pour empêcher une expulsion desdits moyens d'obturation (60) à travers l'orifice de sortie (68) vers l'extérieur, et en ce que l'élément conteneur (74) supporte ledit moyen (62) empêchant l'expulsion, afin qu'une pression de fluide interne agissant sur l'élément de paroi (56) provoque une déformation de celui-ci, rompant ainsi la fermeture hermétique de soupape et permettant audit moyen d'obturation (60) d'être à centrage automatique pour reformer la fermeture hermétique de soupape.

8. Récipient à couvercle selon la revendication 7, dans lequel le bout (66) de la partie (60) en forme de pointeau s'effile à un degré conçu pour permettre une libération commandée de la pression de fluide.

9. Récipient à couvercle selon la revendication 7 ou 8, dans lequel l'ensemble à soupape (52) et l'élément conteneur (74) sont formés de la même matière thermoplastique.

10. Récipient à couvercle selon l'une quelconque des revendications 7 à 9, qui contient en outre un fluide choisi parmi des liquides, de l'eau, des émulsions, des semi-solides, des gels, pâtes, des mousses, des mélanges semi-fluides, des suspensions et des gaz.

11. Appareil et récipient à couvercle selon la revendication 1, caractérisés en ce que l'orifice de sortie comporte une paroi extérieure (47) pour l'ouverture manuelle de l'ensemble à soupape (12) par une pression latérale exercée manuellement, afin d'amener le siège de l'ensemble à soupape en dehors de l'alignement des moyens d'obturation (14).
